Europäisches Patentamt

European Patent Office

Office européen des brevets

(11) Publication number: **0 562 642 A1**

# EUROPEAN PATENT APPLICATION

(21) Application number: **93105158.5**

(22) Date of filing: **29.03.93**

(51) Int. Cl.5: **C08L 21/00**, C08L 23/34, C08J 5/04

(30) Priority: **27.03.92 JP 71085/92**

(43) Date of publication of application:
**29.09.93 Bulletin 93/39**

(84) Designated Contracting States:
**DE FR GB IT**

(71) Applicant: **BANDO CHEMICAL INDUSTRIES, LIMITED**
**2-15, Meiwa-dori 3-chome**
**Hyogo-ku Kobe-shi(JP)**

(72) Inventor: **Shioyama, Tsutomu, c/o Bando Chemical Ind.Ltd.**
**2-15, Meiwa-dori 3-chome, Hyogo-ku**
**Kobe-shi(JP)**
**Inventor: Hamano, Naoki, c/o Bando Chemical Ind.Ltd.**
**2-15, Meiwa-dori 3-chome, Hyogo-ku**
**Kobe-shi(JP)**
**Inventor: Ogino, Masaaki, c/o Bando Chemical Ind.Ltd.**
**2-15, Meiwa-dori 3-chome, Hyogo-ku**
**Kobe-shi(JP)**

(74) Representative: **Gauger, Hans-Peter, Dipl.-Ing. et al**
**Müller, Schupfner & Gauger**
**Maximilianstrasse 6 Postfach 10 11 61**
**D-80085 München (DE)**

(54) **Rubber composition and transmission belt using the same.**

(57) A rubber composition containing a rubber forming a continuous phase of 100 weight parts; a nylon fiber with fine diameter of 1-15 weight parts by the fiber, the nylon fiber being grafted with a molecular of a rubber capable of co-crosslinking to the rubber forming the continuous phase; and a short fiber of 1-30 weight parts is used to at least a part of a rubber of a transmission belt. Thus, high anisotropy in modulus of elasticity in the transmission belt is maintained. Further, stress concentration at an interface of the short fiber and the rubber is distributed to enhance the strength, elasticity and flex fatigue resistance.

F I G.1

EP 0 562 642 A1

BACKGROUND OF THE INVENTION

This invention relates to a rubber composition with high strength, high elasticity and superior flex fatigue resistance, and a transmission belt using the same.

Conventionally, in a transmission belt for driving an auxiliary, a short fiber is mixed to a tension rubber, a compression rubber or a ribbed rubber for reinforcement.

A transmission belt for an automobile, for example, is required to have a longer lifetime than ever because of a requirement to be free from maintenance.

However, while the conventional transmission belt in which the short fiber is merely mixed with a rubber has high rigidity (deformation resistance) in an oriented direction of the short fiber, the short fiber and the rubber is so different in elasticity rate that stress due to flex fatigue concentrates at an interface of the short fiber and the rubber to cause a cracking, which grows in early stage. This causes a shortened lifetime of the belt.

This invention is made in view of the above disadvantage and has its object of providing a rubber composition and a transmission belt with high strength, high elasticity and superior flex fatigue resistance by improving the fiber mixed with the rubber.

To attain the above object, a rubber composition comprises: a rubber forming a continuous phase of 100 weight parts; a nylon fiber with fine diameter of 1-15 weight parts by only the fiber, the nylon fiber being grafted with a molecular of a rubber capable of co-crosslinking to the rubber forming the continuous phase; and a short fiber of 1-30 weight parts.

A transmission belt comprises at least a part composed of a rubber composition containing: a rubber forming a continuous phase of 100 weight parts; a nylon fiber with fine diameter of 1-15 weight parts by only the fiber, the nylon fiber being grafted with a molecular of a rubber capable of co-crosslinking to the rubber forming the continuous phase; and a short fiber of 1-30 weight parts.

Accordingly, the rubber layer is reinforced with the fine-diameter nylon fiber grafted with the rubber molecular and the stress concentration at the interface of the short fiber and the rubber is distributed to an interface of the rubber and the fine-diameter nylon fiber as well, so as not to cause a cracking. Thus, the anisotropy in modulus of elasticity (ratio of a longitudinal direction and a transverse direction) is maintained high and the transmission belt with high strength, high elasticity, superior flex fatigue is obtained.

BRIEF DESCRIPTION OF THE DRAWINGS

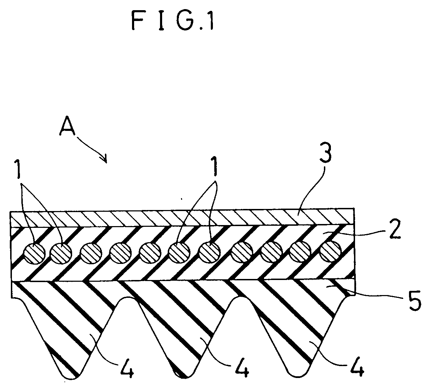

Fig.1 is a vertical section of a V-ribbed belt.

PREFERRED EMBODIMENT OF THE INVENTION

Description is made below about a rubber composition and a transmission belt using the same according to an embodiment of the present invention.

The rubber composition contains a rubber forming a continuous phase (100 weight parts), a nylon fiber with a fine diameter which is grafted with a molecular of a rubber capable of co-crosslinking to the rubber forming the continuous phase (1-15 weight parts by only the fiber) and a short fiber (1-30 weight parts).

As the rubber forming the continuous phase, i.e., a base polymer, hydrogenated acrylonitrile butadiene rubber, chlorosulfonated polyethylene rubber, alkylated chlorosulfonated polyethylene rubber, chloroprene rubber and the like are suitable.

The hydrogenated acrylonitrile butadiene rubber is obtained by adding hydrogen to copolymer of acrylonitrile and 1,3-butadiene and saturating double bond existing in conjugative diene monomer therein. The rate of acrylonitrile butadiene rubber per monomeric unit in the hydrogenated acrylonitrile butadiene rubber is 10-60 weight %. The rate of conjugative diene per monomeric unit therein is not exceeding 30 weight % by means of partial hydrogenation. Molecular weight, glass transition temperature, hydrogenation rate and the like of the hydrogenated acrylonitrile butadiene rubber are not limited. In general, the hydrogenation rate of double bond of the conjugative diene monomer is 10-99%, preferably 80-95%.

The chlorosulfonated polyethylene rubber is obtained by reacting polyethylene rubber with chlorine and sulfur dioxide to be chlorosufonated, and chlorination rate per polyethylene monomeric unit is 25-43%, preferably 25-35%. Chlorosulfonation rate is 0.9-1.5%, preferably 0.9-1.3%.

The same rubber as the base polymer is used as the rubber capable of co-crosslinking to the base polymer. Following combinations are preferable: base polymer of hydrogenated acrylonitrile butadiene rubber and co-crosslinkable rubber of acrylonitrile butadiene rubber and hydride thereof; base polymer of chlorosulfonated polyethylene rubber and co-crosslinkable rubber of chlorosulfonated polyethylene rubber;

2

base polymer of alkylated chlorosulfonated polyethylene rubber and co-crosslinkable rubber of alkylated chlorosulfonated polyethylene rubber; base polymer of chloroprene rubber and co-crosslinkable rubber of chloroprene rubber, chlorosulfonated polyethylene rubber or alkylated chlorosulfonated polyethylene rubber.

The nylon fiber with the fine diameter which is grafted with the molecular of the rubber capable of co-crosslinking to the base polymer is obtained by mixing and kneading, at a temperature higher than a melting point of thermoplastic polyamide, for example, synthetic rubber capable of being vulcanized (100 weight parts), thermoplastic polyamide particle (50 weight parts), tackifier (0.5-20 weight parts), novolac phenol resin (0.2-5 weight parts per 100 weight parts of total amount of the synthetic rubber and the thermoplastic polyamide particle), and a compound capable of generating formaldehyde at heating (1-50 weight parts per 100 weight parts of novolac phenol resin) and by extruding and winding the mixture.

The rate of the fine-diameter nylon fiber grafted with the molecular of the rubber capable of co-crosslinking to the base polymer is preferable to be set within a range from 1 to 15 weight parts by only the fiber. The reason why the nylon fiber rate is set within the range is that an effect of adding the nylon fiber is not sufficiently obtained with less than 1 weight part and the anisotropy in modulus of elasticity with respect to longitudinal/transverse directions is not sufficiently displayed with more than 15 weight parts.

As to the short fiber, for example, polyester short fiber, nylon short fiber and aramid short fiber are used. With the short fiber rate of 1-30 weight parts, the anisotropy in modulus of elasticity is efficiently obtained.

In the thus obtained fine-diameter nylon fiber, the rubber molecular grafted with the nylon is co-crosslinked, with a crosslinking reaction of the base polymer, to be completely adhered to the base polymer. In the conventional rubber composition to which merely the short fiber is added, strain stress in the longitudinal direction is enhanced and the anisotropy in modulus of elasticity is high, but stress concentrates at the interface of the short fiber and the rubber to cause a cracking, which lowers fatigue resistance. In contrast, in the present invention, by adding both the short fiber and the fine-diameter nylon fiber grafted with the rubber molecular, the high anisotropy in modulus of elasticity is maintained in the rubber and the stress concentration at the interface of the short fiber and the rubber is distributed as well to an interference of the rubber and the fine-diameter nylon fiber, thus enhancing strength, elasticity and fatigue resistance.

In addition, the rubber composition in the present invention contains an accelerator activator (crosslinking agent). As the accelerator activator, sulfur or organic peroxides is used when the base polymer is hydrogenated acrylonitrile butadiene rubber. As the organic peroxides, diazo compound is preferable such as benzoyl peroxide, lauroyl peroxide, di-tertiary butyl peroxide, acetyl peroxide, tertiary butyl peroxybenzoic acid, dicumyl peroxide, peroxybenzoic acid, tertiary butyl peroxypivalate, 2,2'-azobis isobutyronitrile. The organic peroxides are used solely or in combination. The ratio of the organic peroxides is 0.2-10 weight parts per 100 weight parts rubber.

When the base polymer is chlorosulfonated polyethylene rubber or alkylated chlorosulfonated polyethylene rubber, magnesia, litharge, polyhydric alcohol and an accelerating agent are preferable to be added thereto.

Further, various kinds of medicine generally used in rubber industry fields such as a reinforcement (carbon black, silica, and the like) a filler (calcium carbonate, talc, and the like) a accelerator activator, a vulcanization accelerator, a plasticizer, a stabilizer, a processing aid, an antioxidant, a colorant are optionally added to the rubber composition in the present invention according to uses.

A V-ribbed belt A as a transmission belt made of the rubber composition is described with reference to Fig.1.

The V-ribbed belt A has an adhesive rubber layer 2 in which a plurality of tensile cords 1 are embedded, a rubber coating cloth 3 on the upper surface of the adhesive rubber 2, and a ribbed rubber layer 5 with three ribs 4 on the lower surface thereof. The adhesive rubber layer 2, the rubber coating cloth 3 and the ribbed rubber layer 5 are formed integrally. The ribbed rubber layer 5 is composed of the above rubber composition.

Working Examples of the present invention are described in detail.

(WORKING EXAMPLE 1)

The rubber composition of hydrogenated acrylonitrile butadiene rubber indicated in Table 1 is mixed and kneaded by a Banbury mixer, then rolled by a calendar roll to orient a short fiber of nylon-66 (3mm length) in a belt width direction, thus obtained is an unvulcanized rubber sheet. An amount of the short fiber added is 10 wt% together with the fine-diameter nylon fiber grafted with a rubber molecular. The unvulcanized rubber sheet is vulcanized at 160°C for 30 minutes to obtain a vulcanized rubber sheet. The property of the vulcanized rubber sheet is indicated in Table 1.

The V-ribbed belt A is made using the unvulcanized rubber sheet as the ribbed rubber layer 5. In detail, as shown in Fig.1, the 975mm V-ribbed belt A with three ribs are obtained by forming the rubber coated cloth 3 on the upper surface of the adhesive rubber layer 2 in which the plural tensile cords 1 are embedded and forming the ribbed rubber layer 5 with three ribs 4 on the lower surface thereof. A running test is conducted to measure a lifetime of the belt applying a dynamic fatigue. The results are indicated in Table 1.

In the running test the belt is trained to a 120mm drive pulley (the number of rotations = 4900rpm), a 120mm driven pulley (load = 16 horsepower) and a 70mm idler pulley (set weight (tensile) 85kgf), and is run under 85°C atmosphere.

Table 1

|  | | present invention | | | | comparable examples | |
| --- | --- | --- | --- | --- | --- | --- | --- |
|  | | 1 | 2 | 3 | 4 | 1 | 2 |
| unvulcanized rubber composition (weight part) | | | | | | | |
| H-NBR | 1) | 100 | 100 | 100 | 100 | 100 | 100 |
| NBR-II | 2) | 5 | 10 | 30 | 5 | - | 60 |
| FEF carbon | | 40 | 40 | 40 | 40 | 40 | 40 |
| zinc oxide | | 5 | 5 | 5 | 5 | 5 | 5 |
| stearic acid | | 1 | 1 | 1 | 1 | 1 | 1 |
| sulfur | | 0.5 | 0.5 | 0.5 | - | 0.5 | 0.5 |
| vulcanization accelerator | | 3 | 3 | 3 | - | 3 | 3 |
| peroximon F-40 | 3) | - | - | - | 5 | - | - |
| nylon-66 | 4) | 13 | 10 | 3 | 13 | 15 | - |
| vulcanized rubber property (transverse direction) | | | | | | | |
| hardness (JIS-A) | | 78 | 76 | 77 | 74 | 77 | 80 |
| 100% modulus ($kg/cm^2$) | | 43 | 47 | 49 | 50 | 45 | 69 |
| tensile strength ($kg/cm^2$) | | 210 | 180 | 144 | 230 | 200 | 123 |
| fracture elongation (%) | | 380 | 345 | 320 | 450 | 400 | 310 |
| E'(longitudinal direction) /E'(transverse direction) | | 10 | 8 | 7 | 9 | 9 | 2 |
| De MATTIA flex fatigue resistance | 5) | 30000 | 45000 | 28000 | 35000 | 10000 | 10000 |
| belt lifetime (hour) | | 260 | 310 | 250 | 230 | 180 | 130 |

1) Zetpol 2020 by NIPPON ZEON Co., LTD.
2) fine-diameter nylon fiber grafted with NBR molecular (40wt% nylon, 0.3 $\mu$m fiber diameter, 300 $\mu$m fiber length)
3) 1,3-bis-(t-butylperoxy-iso-propyl) benzene (40% fineness)
4) 1.14 specific gravity, 28 $\mu$m fiber diameter, 3mm fiber length
5) number of times that crackings grow from 2 to 10mm, 40-80mm stroke

(WORKING EXAMPLE 2)

The rubber composition of chlorosufonated polyethylene rubber indicated in Table 2 is mixed and kneaded by the Banbury mixer, than rolled by the calendar roll to orient the short fiber of nylon-66 (3mm length) in the belt width direction, thus obtained is an unvulcanized rubber sheet. The amount of the short fiber added is 10 wt% together with the fine-diameter nylon fiber grafted with the rubber molecular, as well as in the first working example. The unvulcanized rubber sheet is vulcanized at 160°C for 30 minutes to obtain a vulcanized rubber sheet. The property of the vulcanized rubber sheet is indicated in Table 2.

The V-ribbed belt A is made using the unvulcanized rubber sheet as the ribbed rubber layer 5 as well as in the first working example, and the lifetime shortened by dynamic fatigue is measured after the same running test as in the first example. The results are indicated in Table 2.

Table 2

|  | | present invention | | | comparable examples | |
|---|---|---|---|---|---|---|
|  | | 1 | 2 | 3 | 1 | 2 |
| unvulcanized rubber composition (weight part) chlorosulfonated polyethylene | 1) | 100 | 100 | 100 | 100 | 100 |
| SCM-1I | 2) | 5 | 10 | 30 | – | 60 |
| FEF carbon | | 50 | 50 | 50 | 50 | 50 |
| MgO | | 4 | 4 | 4 | 4 | 4 |
| paraffinic process oil | | 10 | 10 | 10 | 10 | 10 |
| pentaerythritol | 3) | 2 | 2 | 2 | 2 | 2 |
| promoter TRA | 4) | 1 | 1 | 1 | 1 | 1 |
| nylon-66 | 5) | 13 | 11 | 3 | 15 | – |
| vulcanized rubber property (transverse direction) | | | | | | |
| hardness (JIS-A) | | 75 | 76 | 74 | 75 | 78 |
| 100% modulus ($kg/cm^2$) | | 56 | 53 | 55 | 52 | 75 |
| tensile strength ($kg/cm^2$) | | 130 | 150 | 126 | 130 | 99 |
| fracture elongation (%) | | 240 | 230 | 200 | 260 | 150 |
| E'(longitudinal direction) /E'(transverse direction) | | 9 | 8 | 6.5 | 9 | 3 |
| De MATTIA flex fatigue resistance | 6) | 20000 | 30000 | 15000 | 5000 | 4000 |
| belt lifetime (hour) | | 200 | 260 | 160 | 115 | 78 |

1) Hypalon #40 by Du Pont
2) fine-diameter nylon fiber grafted with CSM molecular (40wt% nylon, 0.3 $\mu$m fiber diameter, 300 $\mu$m fiber length)
3) Adekacizer K-2 by ADEKA ARGUS CHEMICAL CO., LTD.
4) promoter:dipentamethylenethiuram tetrasulfide
5) 1.14 specific gravity, 28 $\mu$m fiber diameter, 3mm fiber length
5) number of times that crackings grow from 2 to 10mm, 40-80mm stroke

(WORKING EXAMPLE 3)

The rubber composition of alkylated chlorosulfonated polyethylene rubber indicated in Table 3 is mixed and kneaded by the Banbury mixer, than rolled by the calendar roll to orient the short fiber of nylon-66 (3mm length) in the belt width direction, thus obtained is an unvulcanized rubber sheet. The amount of the short fiber added is 10 wt% together with the fine-diameter nylon fiber grafted with the rubber molecular, as well as in the first working example. The unvulcanized rubber sheet is vulcanized at 160°C for 30 minutes to obtain a vulcanized rubber sheet. The property of the vulcanized rubber sheet is indicated in Table 3.

The V-ribbed belt A is made using the unvulcanized rubber sheet as the ribbed rubber layer 5 as well as in the first working example, and the lifetime shortened by dynamic fatigue is measured after the same running test as in the first example. The results are indicated in Table 3.

Table 3

|  |  | present invention | | | comparable examples | |
|---|---|---|---|---|---|---|
|  |  | 1 | 2 | 3 | 1 | 2 |
| unvulcanized rubber composition (weight part) | | | | | | |
| alkylated chlorosulfonated polyethylene | 1) | 100 | 100 | 100 | 100 | 100 |
| CSM-1I | 2) | 5 | 10 | 30 | – | 60 |
| FEF carbon | | 50 | 50 | 50 | 50 | 50 |
| MgO | | 4 | 4 | 4 | 4 | 4 |
| plasticizer | 3) | 10 | 10 | 10 | 10 | 10 |
| pentaerythritol | 4) | 2 | 2 | 2 | 2 | 2 |
| promoter TRA | 5) | 1 | 1 | 1 | 1 | 1 |
| nylon-66 | 6) | 13 | 11 | 3 | 15 | – |
| vulcanized rubber property (transverse direction) | | | | | | |
| hardness (JIS-A) | | 77 | 74 | 75 | 76 | 77 |
| 100% modulus ($kg/cm^2$) | | 58 | 57 | 59 | 55 | 78 |
| tensile strength ($kg/cm^2$) | | 120 | 140 | 135 | 125 | 90 |
| fracture elongation (%) | | 250 | 240 | 230 | 250 | 160 |
| E'(longitudinal direction) /E'(transverse direction) | | 9 | 7.5 | 5.5 | 9 | 3.5 |
| De MATTIA flex fatigue resistance | 7) | 12000 | 28000 | 11000 | 4000 | 2500 |
| belt lifetime (hour) | | 180 | 230 | 160 | 110 | 80 |

1) Acsium by Du Pont
2) fine-diameter nylon fiber grafted with CSM molecular
   (40wt% nylon, 0.3 $\mu$m fiber diameter, 300 $\mu$m fiber length)
3) dioctyl sebacate
4) Adekacizer K-2 by ADEKA ARGUS CHEMICAL CO., LTD.
4) promoter:dipentamethylenethiuram tetrasulfide
5) 1.14 specific gravity, 28 $\mu$m fiber diameter, 3mm fiber length
5) number of times that crackings grow from 2 to 10mm,
   40-80mm stroke

(WORKING EXAMPLE 4)

The rubber composition of chloroprene rubber indicated in Table 4 is mixed and kneaded by the Banbury mixer, than rolled by the calendar roll to orient the short fiber of nylon-66 (3mm length) in the belt width direction, thus obtained is an unvulcanized rubber sheet. The amount of the short fiber added is 10 wt% together with the fine-diameter nylon fiber grafted with the rubber molecular, as well as in the first working example. The unvulcanized rubber sheet is vulcanized at 160°C for 30 minutes to obtain a vulcanized rubber sheet. The property of the vulcanized rubber sheet is indicated in Table 4.

The V-ribbed belt A is made using the unvulcanized rubber sheet as the ribbed rubber layer 5 as well as in the first working example, and the lifetime shortened by dynamic fatigue is measured after the same running test as in the first example. The results are indicated in Table 4.

Table 4

| | present invention | | | comparable examples | |
|---|---|---|---|---|---|
| | 1 | 2 | 3 | 1 | 2 |
| **unvulcanized rubber composition(weight part)** | | | | | |
| chloroprene 1) | 100 | 100 | 100 | 100 | 100 |
| CSM-II 2) | 5 | 10 | 30 | – | 60 |
| FEF carbon | 50 | 50 | 50 | 50 | 50 |
| MgO | 4 | 4 | 4 | 4 | 4 |
| ZnO | 5 | 5 | 5 | 5 | 5 |
| plasticizer 3) | 10 | 10 | 10 | 10 | 10 |
| nylon-66 4) | 13 | 11 | 3 | 15 | – |
| **vulcanized rubber property (transverse direction)** | | | | | |
| hardness (JIS-A) | 78 | 77 | 74 | 78 | 80 |
| 100% modulus (kg/cm$^2$) | 53 | 52 | 48 | 51 | 82 |
| tensile strength (kg/cm$^2$) | 130 | 118 | 110 | 130 | 100 |
| fracture elongation (%) | 250 | 230 | 190 | 280 | 130 |
| E'(longitudinal direction) /E'(transverse direction) | 9 | 7.5 | 5 | 9 | 2 |
| De MATTIA flex fatigue resistance 6) | 18000 | 24000 | 12000 | 6000 | 1500 |
| belt lifetime (hour) | 210 | 230 | 140 | 125 | 50 |

1) GRT by Du PONT-SHOWA DENKO CO., LTD.
2) fine-diameter nylon fiber grafted with CSM molecular
   (40wt% nylon, 0.3 $\mu$m fiber diameter, 300 $\mu$m fiber length)
3) dioctyl sebacate
4) 1.14 specific gravity, 28 $\mu$m fiber diameter, 3mm fiber length
5) number of times that crackings grow from 2 to 10mm,
   40-80mm stroke

In each working example, the present invention is superior to the comparable examples in De MATTIA flex fatigue resistance and belt lifetime.

In the working examples, the rubber composition according to the present invention is applied to the ribbed rubber layer 5 in the V-ribbed belt A, but is applicable to a tension rubber and a compression rubber according to belt kinds.

The rubber composition according to the present invention may be applied to a toothed belt, a V-belt, and the like, as well as the V-ribbed belt A in the working examples.

Claims

1. A rubber composition comprising:
   a rubber forming a continuous phase of 100 weight parts;
   a nylon fiber with fine diameter of 1-15 weight parts by the fiber, the nylon fiber being grafted with a molecular of a rubber capable of co-crosslinking to the rubber forming the continuous phase; and
   a short fiber of 1-30 weight parts.

2. A transmission belt comprising at least a part composed of a rubber composition containing:
   a rubber forming a continuous phase of 100 weight parts;
   a nylon fiber with fine diameter of 1-15 weight parts by the fiber, the nylon fiber being grafted with a molecular of a rubber capable of co-crosslinking to the rubber forming the continuous phase; and
   a short fiber of 1-30 weight parts.

3. The rubber composition according to Claim 1, wherein the rubber forming the continuous phase is hydrogenated acrylonitrile butadiene rubber, and the rubber capable of co-crosslinking thereto is acrylonitrile butadiene rubber and hydride thereof.

4. The rubber composition according to Claim 1, wherein the rubber forming the continuous phase and the rubber capable of co-crosslinking thereto are chlorosulfonated polyethylene rubber.

5. The rubber composition according to Claim 1, wherein the rubber forming the continuous phase and the rubber capable of co-crosslinking thereto are alkylated chlorosulfonated polyethylene rubber.

6. The rubber composition according to Claim 1, wherein the rubber forming the continuous phase and the rubber capable of co-crosslinking thereto are chloroprene rubber.

7. The rubber composition according to Claim 1, wherein the rubber forming the continuous phase is chloroprene rubber, and the rubber capable of co-crosslinking thereto is chlorosulfonated polyethylene rubber or alkylated chlorosulfonated polyethylene rubber.

8. The transmission belt according to Claim 2, wherein the rubber forming the continuous phase is hydrogenated acrylonitrile butadiene rubber, and the rubber capable of co-crosslinking thereto is acrylonitrile butadiene rubber and hydride thereof.

9. The transmission belt according to Claim 2, wherein the rubber forming the continuous phase and the rubber capable of co-crosslinking thereto are chlorosulfonated polyethylene rubber.

10. The transmission belt according to Claim 2, wherein the rubber forming the continuous phase and the rubber capable of co-crosslinking thereto are alkylated chlorosulfonated polyethylene rubber.

11. The transmission belt according to Claim 2, wherein the rubber forming the continuous phase and the rubber capable of co-crosslinking thereto are chloroprene rubber.

12. The transmission belt according to Claim 2, wherein the rubber forming the continuous phase is chloroprene rubber, and the rubber capable of co-crosslinking thereto is chlorosufonated polyethylene rubber or alkylated chlorosufonated polyethylene rubber.

FIG.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | PATENT ABSTRACTS OF JAPAN vol. 14, no. 146 (C-704)(4089) 20 March 1990 & JP-A-20 16 138 ( UBE IND LTD ) 19 January  1990 * abstract * | | C08L21/00 C08L23/34 C08J5/04 |
| A | PATENT ABSTRACTS OF JAPAN vol. 12, no. 139 (C-491)(2986) 27 April 1988 & JP-A-62 256 851 ( UBE IND LTD ) * abstract * | | |
| A | DATABASE WPI Section Ch, Week 8543, Derwent Publications Ltd., London, GB; Class A, AN 85-265830 & JP-A-60 177 042 (UBE INDUSTRIES KK) 11 September 1985 * abstract * | | |
| A | EP-A-0 150 598 (UBE INDUSTRIES LTD) * page 11, line 1 - line 3; claim 1 * | | **TECHNICAL FIELDS SEARCHED (Int. Cl.5 )** C08L C08J C08G |

The present search report has been drawn up for all claims

| Place of search | Date of completion of the search | Examiner |
|---|---|---|
| THE HAGUE | 06 JULY 1993 | VAN HUMBEECK F. |

EPO FORM 1503 03.82 (P0401)